Europäisches Patentamt

European Patent Office

Office européen des brevets

(19)

(11) **EP 0 772 220 B1**

(12) **FASCICULE DE BREVET EUROPEEN**

(45) Date de publication et mention
de la délivrance du brevet:
**12.01.2000 Bulletin 2000/02**

(51) Int Cl.⁷: **H01J 23/34**

(21) Numéro de dépôt: **96402296.6**

(22) Date de dépôt: **29.10.1996**

(54) **Dispositif d'alimentation électrique d'un ensemble de tubes électroniques à fiabilité accrue**

Elektrische Stromversorgungsvorrichtung für eine Anordnung von Elektronenröhren

Device for electric power supply for an assembly of electron tubes

(84) Etats contractants désignés:
**BE DE FR IT**

(30) Priorité: **03.11.1995 FR 9513003**

(43) Date de publication de la demande:
**07.05.1997 Bulletin 1997/19**

(73) Titulaire: **THOMSON TUBES ELECTRONIQUES
78140 Vélizy (FR)**

(72) Inventeur: **Boone, Philippe
92402 Courbevoie Cedex (FR)**

(74) Mandataire: **Simonnet, Christine et al
Thomson-CSF Propriété Intellectuelle,
13, Avenue du Président Salvador Allende
94117 Arcueil Cédex (FR)**

(56) Documents cités:
**EP-A- 0 260 825**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un dispositif d'alimentation électrique d'un ensemble de tubes électroniques, possédant une fiabilité accrue.

Ces tubes peuvent être par exemple des tubes à ondes progressives qui ont leur application dans les télécommunications par satellite, où ils sont associés à plusieurs dans un montage amplificateur.

Dans le passé, on utilisait des sources d'alimentation pour alimenter chacun des tubes. Lorsque l'un des tubes tombait en panne, les autres pouvaient continuer à fonctionner.

De plus en plus, dans les applications spatiales, pour gagner de la place et du poids, on a été amené à utiliser une seule source d'alimentation délivrant à la fois des hautes tensions et de la puissance, pour alimenter certaines électrodes haute tension de ces tubes. Ces électrodes sont notamment les électrodes du collecteur qui est généralement déprimé et la cathode. Les électrodes de même nature de chacun des tubes sont alors montées en parallèle.

Un tel montage en parallèle pose des problèmes de fiabilité, car s'il se produit un défaut d'isolement au niveau de l'une de ces électrodes, l'amplificateur ne peut plus fonctionner. En gagnant en poids et en encombrement, on a perdu en fiabilité ce qui est difficilement acceptable dans les applications spatiales.

La présente invention vise à remédier à ces inconvénients et propose un dispositif d'alimentation électrique d'un ensemble de tubes électroniques qui ne présente pas cette perte en fiabilité tout en restant relativement léger et compact.

Ce dispositif d'alimentation comporte notamment des éléments de protection et de coupure au niveau des électrodes alimentées en parallèle pour éviter que la défaillance de l'un des tubes rende inutilisable les autres.

La présente invention propose un dispositif d'alimentation électrique d'un ensemble de tubes électroniques qui possèdent un canon comprenant une cathode destinée à émettre un faisceau d'électrons lorsqu'elle est chauffée par un dispositif de chauffage, un wehnelt, une anode de régulation du faisceau d'électrons, une ou plusieurs électrodes d'un collecteur et un dispositif d'interaction du faisceau d'électrons situé entre le canon et le collecteur.

Le dispositif d'alimentation comprend une source d'alimentation principale destinée à alimenter en parallèle au moins la cathode et les électrodes de collecteur, et des premières sources d'alimentation auxiliaires distinctes pour alimenter chacune une des anodes.

Il comporte également des secondes sources d'alimentation auxiliaires commandables séparément pour alimenter chacune au moins le wehnelt et le dispositif de chauffage d'un même tube, des éléments de protection unidirectionnels pour protéger la source d'alimentation principale de chacune des électrodes de collecteur, des moyens de coupure pour isoler la source d'alimentation principale de chacune des cathodes, des moyens de protection de l'ensemble des dispositifs d'interaction prévus pour arrêter au moins la source d'alimentation principale lorsque le courant global dans les dispositifs d'interaction est supérieur à un seuil, des dispositifs de protection des premières sources d'alimentation auxiliaires en cas de court-circuit mettant en jeu une des anodes.

La source d'alimentation principale peut être formée de plusieurs sources d'alimentation élémentaires, les cathodes étant alimentées par l'une d'entre elles et les électrodes de collecteur par au moins une autre. Cette variante permet un réglage plus facile des tensions fournies.

Lorsque les canons possèdent chacun une seconde anode servant de barrière ionique, les secondes anodes peuvent être alimentées chacune par une des secondes sources d'alimentation auxiliaires ou bien par la source d'alimentation principale, dans ce dernier cas, un dispositif de protection est prévu pour protéger la source d'alimentation principale de chacune des secondes anodes.

Les éléments de protection unidirectionnels sont, de préférence, des éléments semi-conducteurs tels que des diodes ou des thyristors.

Il est préférable, pour améliorer encore la fiabilité, que les éléments semi-conducteurs soient associés à plusieurs dans un montage parallèle.

Les moyens de coupure sont, de préférence, des contacts de relais.

Les premières sources d'alimentation auxiliaires peuvent être référencées par rapport à un potentiel fourni par la source d'alimentation principale ou être alimentées par la source d'alimentation principale. Ce potentiel est de préférence le potentiel fourni aux cathodes.

Chaque seconde source d'alimentation auxiliaire est référencée par rapport au potentiel de cathode du tube qu'elle alimente et éventuellement par rapport à la masse dans la version où elle alimente une seconde anode.

Les dispositifs de protection des premières sources d'alimentation auxiliaires et de la source d'alimentation principale peuvent être, par exemple, des éléments résistants.

Au lieu d'être des éléments résistants, les dispositifs de protection des premières sources d'alimentation auxiliaires peuvent être des contacts de relais.

Les contacts des relais associés à un même tube peuvent être actionnés simultanément.

Pour réduire le nombre de composants, les contacts de relais associés à un même tube peuvent appartenir à un relais multicontact.

Un arrêt et/ou démarrage d'une seconde source d'alimentation auxiliaire peut commander l'ouverture et/ou la fermeture des moyens de coupure reliés à la cathode du tube alimenté par ladite seconde source d'alimentation auxiliaire.

Un arrêt et/ou démarrage d'une seconde source d'alimentation auxiliaire peut commander l'arrêt et/ou le démarrage de la première source d'alimentation auxiliaire qui alimente le même tube que ladite seconde source.

D'autres caractéristiques et avantages de l'invention apparaîtront à la lecture de la description suivante, illustrée par les figures annexées qui représentent:

- la figure 1: un schéma d'un dispositif d'alimentation électrique d'un ensemble de tubes électroniques connu;
- la figure 2: un exemple d'un dispositif d'alimentation électrique d'un ensemble de tubes électroniques selon l'invention;
- la figure 3: une première variante d'un dispositif d'alimentation électrique d'un ensemble de tubes électroniques selon l'invention;
- la figure 4: une seconde variante d'un dispositif d'alimentation électrique d'un ensemble de tubes électroniques selon l'invention.

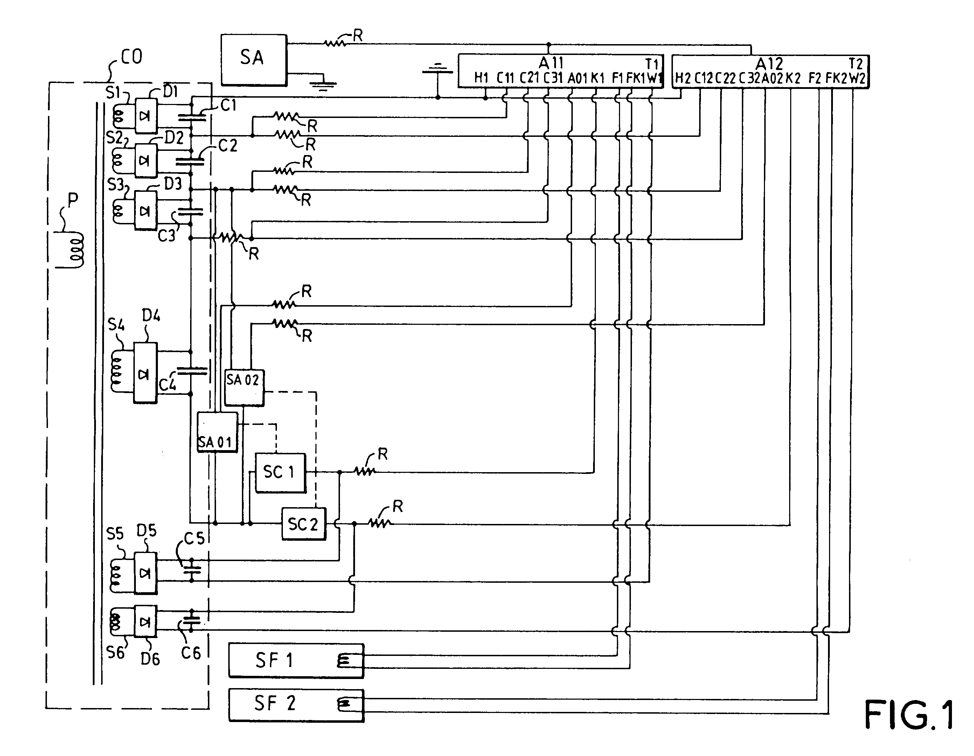

La figure 1 montre schématiquement un dispositif d'alimentation d'un ensemble de tubes électroniques selon l'art connu.

Dans l'exemple décrit, les tubes électroniques T1 T2, au nombre de deux sont des tubes à onde progressive.

Un tube à onde progressive comporte de manière classique une cathode, en matériau thermoémissif, chauffée par un dispositif de chauffage. La cathode est portée à un potentiel négatif de l'ordre de -6000 Volts. La cathode est entourée d'une électrode de focalisation dénommée wehnelt, portée à un potentiel proche de celui de la cathode, par exemple -5 Volts par rapport à celui de la cathode. Ces deux électrodes sont voisines d'une première anode qui sert de régulation du courant émis par la cathode et éventuellement, par une seconde anode qui sert de barrière ionique et qui évite que les ions contenus dans le tube puissent atteindre la cathode.

La cathode, son dispositif de chauffage, le wehnelt et les anodes forment un canon à électrons. Les anodes et le wehnelt munies d'une ouverture centrale, contribuent à ce que les électrons émis par la cathode se regroupent en un faisceau long et fin. La première anode, la plus proche de la cathode, est généralement portée à un potentiel de l'ordre de +1500 Volts par rapport à celui de la cathode. La seconde anode, la plus éloignée de la cathode, est généralement portée à un potentiel supérieur à celui d'un dispositif d'interaction dans lequel les électrons pénètrent, après avoir quitté le canon.

Le dispositif d'interaction, généralement formé d'une ligne en hélice dans les tubes à onde progressive, est porté à la masse. Après avoir parcouru le dispositif d'interaction et cédé leur énergie, les électrons sont recueillis dans un collecteur. Ce collecteur comporte une ou plusieurs électrodes portées à des potentiels décroissants plus on s'éloigne de l'espace d'interaction. Ces potentiels sont inférieurs à celui de l'espace d'interaction mais supérieurs à celui de la cathode.

Lorsque le collecteur possède trois électrodes successives, la première peut être portée à environ +3000 Volts et la dernière à environ +700 Volts par rapport à la cathode.

Une source unique d'alimentation principale CO délivrant à la fois des hautes tensions et de la puissance est utilisée pour alimenter certaines électrodes des tubes T1, T2. Il s'agit des cathodes K1 et K2, des électrodes du collecteur C11 et C21, C21 et C22, C31 et C32, des wehnelts W1, W2. Cette source d'alimentation principale CO est un convertisseur réalisé par un transformateur avec un primaire P et plusieurs secondaires S1 à S6 fournissant des tensions différentes. Des moyens de redressement D1 à D6 ont leurs deux bornes d'entrée reliées chacune à un secondaire S1 à S6. Des condensateurs C1 à C6 sont montés entre les deux bornes de sortie des moyens de redressement D1 à D6.

Parmi les électrodes alimentées par la source d'alimentation CO principale, les cathodes K1 et K2 sont montées en parallèle et reliées au secondaire S4. Il en est de même pour les électrodes des collecteurs qui sont regroupées par type. Le secondaire S1 est relié aux électrodes C11 et C12, le secondaire S2 aux électrodes C21 et C22, le secondaire S3 aux électrodes C31 et C32.

Les deux wehnelts W1 et W2 sont reliés chacun à un secondaire différent respectivement S5 et S6. Ils reçoivent des tensions différentes.

Les hélices H1, H2 sont montées en parallèle et reliées à la masse de la source d'alimentation principale CO.

Les premières anodes A01 et A02 sont alimentées de manière individuelle, chacune par une première source d'alimentation auxiliaire, respectivement SA01 et SA02, alimentée par la source d'alimentation principale CO1. Le potentiel des premières anodes A01 et A02 est propre à chaque tube et fonction du courant de cathode. Un senseur de courant SC1 et SC2 est prévu pour mesurer le courant de chaque cathode K1, K2. La tension fournie par chaque première source d'alimentation auxiliaire SA01, SA02 aux premières anodes A01 et A02 est adaptée au courant cathode mesuré.

Ces premières sources d'alimentation auxiliaires SA01, SA02 sont très peu chargées, leur courant nominal étant de l'ordre de quelques micro-Ampères. S'il se produit un défaut d'isolement entre l'une des premières anodes et la masse, la source d'alimentation CO principale s'arrête immédiatement sous l'effet d'une surconsommation.

Une seconde source d'alimentation auxiliaire SA, de faible puissance, alimente les secondes anodes A11 et A12 servant de barrière ionique. Les secondes anodes A11, A12 sont montées en parallèle.

Les dispositifs de chauffage des cathodes K1 et K2 sont montés entre les bornes référencées F1, FK1 pour le tube T1 et F2, FK2 pour le tube T2. Les bornes FK1 et FK2 sont reliées à la cathode correspondante K1 et K2. Chaque dispositif de chauffage est alimenté en courant alternatif par une troisième source d'alimentation auxiliaire autonome SF1 et SF2 commandable. La commande de chacune des troisièmes sources d'alimentation auxiliaires SF1, SF2 permet de mettre en route le tube correspondant.

S'il apparaît un défaut d'isolement au niveau de l'une des électrodes montée en parallèle de l'un des tubes, l'ensemble des tubes ne peut plus fonctionner à cause de ce montage en parallèle.

Des résistances de faible valeur toutes référencées R sont placées en série entre les premières anodes A01, A02 et leur alimentation SA01, SA02, entre les secondes anodes A11, A12 et leur alimentation SA et entre les cathodes K1, K2, les électrodes C11, C21, C31, C12, C22, C32 de collecteur et leur alimentation CO1. Elles protègent les alimentations en cas de brèves décharges électriques dans les tubes mais ne peuvent tenir en permanence un mauvais isolement.

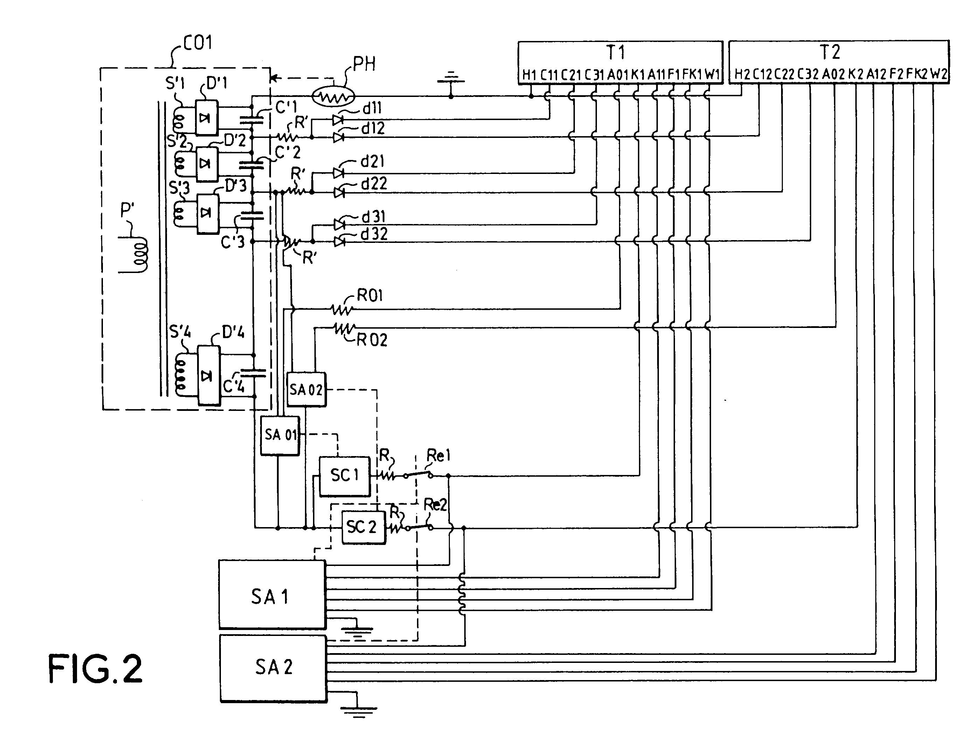

La figure 2 montre d'une manière schématique un exemple d'un dispositif d'alimentation électrique d'un ensemble de tubes électroniques conforme à l'invention.

Comme sur la figure 1, les tubes représentés et référencés T1, T2 sont des tubes à ondes progressives, mais il est bien entendu que le dispositif d'alimentation selon l'invention s'applique aux autres tubes à interaction longitudinale.

On retrouve comme dans l'art connu, une source d'alimentation principale CO1, délivrant des hautes tensions et de la puissance, pour alimenter au moins les cathodes K1, K2 des tubes T1 et T2 et les électrodes C11 et C12, C21 et C22, C31 et C32 des collecteurs. Ces électrodes, regroupées par type sont alimentées en parallèle. La source d'alimentation principale CO1 est représentée de la même manière que sur la figure 1, avec un primaire P' et des secondaires S'1 à S'4, des moyens de redressement D'1 à D'4 et des condensateurs C'1 à C'4.

Selon l'invention, des éléments de protection unidirectionnels d11, d12, d21, d22, d31, d32 protègent la source d'alimentation principale CO1 de chaque électrode C11, C12, C21, C22, C31, C32 de collecteur. Ces éléments de protection unidirectionnels sont de préférence à semi-conducteurs tels que des diodes haute tension, par exemple de type unitrode USR.80.A, montées en série entre la source d'alimentation CO1 et chaque électrode de collecteur. La cathode des diodes d11, d12, d21, d22, d31, d32 est reliée respectivement à une électrode C11, C12, C21, C22, C31, C32 de collecteur et l'anode à la source d'alimentation principale CO1. En fonctionnement normal, chaque diode d11, d12, d21, d22, d31, d32 laisse passer du courant de la source d'alimentation principale CO1 vers l'électrode à laquelle elle est reliée. Si l'une des électrodes C11, C12, C21, C22, C31, C32 présente un défaut d'isolement par rapport à la masse ou par rapport à une autre électrode du même collecteur, la source d'alimentation principale CO1 est protégée car aucun courant ne peut circuler d'une électrode vers la source d'alimentation principale CO1. Elle n'est jamais mise en court-circuit. D'autres éléments de protection unidirectionnels à semi-conducteurs peuvent être utilisés à la place des diodes, il s'agit par exemple de thyristors. On pourra associer aux diodes d11, d12, d21, d22, d31, d32 des résistances en série R' pour faciliter leur commutation.

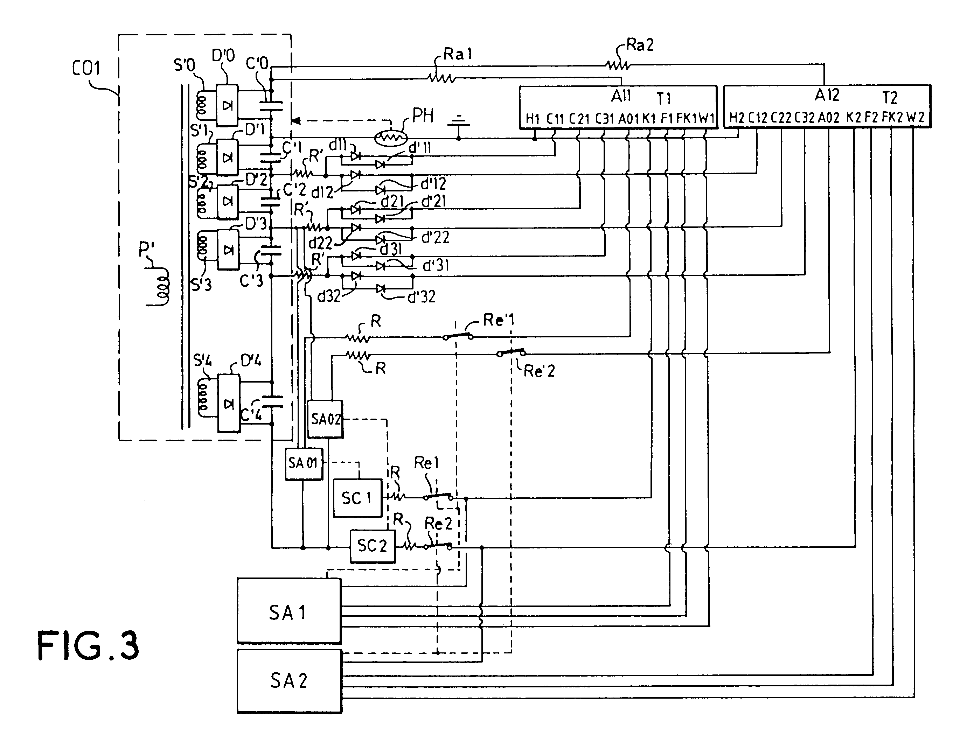

Pour améliorer encore la fiabilité du dispositif d'alimentation électrique, au lieu d'utiliser une seule diode ou un seul thyristor par électrode de collecteur, on peut en utiliser plusieurs d11, d'11, d12, d'12, d21, d'21, d22, d'22, d31, d'31, d32, d'32 dans un montage parallèle. La figure 3 illustre cette variante avec deux diodes montées en parallèle dans le même sens. Si l'une des diodes forme un circuit ouvert, l'autre continue d'assurer la protection.

Des moyens de coupure sont prévus pour isoler la source d'alimentation principale CO1 de chaque cathode K1, K2. Ces moyens sont représentés sous la forme d'un contact de relais haute tension Re1, Re2 monté entre chaque cathode K1, K2 et la source d'alimentation principale CO1. Les relais Re1, Re2 peuvent par exemple être de type Kilovac HC2. En fonctionnement normal, les contacts des relais Re1, Re2 sont fermés. Lorsqu'un tube a été identifié comme déficient, le contact du relais Re1, Re2 correspondant au tube déficient peut être ouvert, par télécommande par exemple dans les applications spatiales, ce qui met le tube hors service et ne perturbe pas le fonctionnement des autres.

La première anode A01, A02 de régulation de courant de chacun des tubes est alimentée comme sur la figure 1, par une première source d'alimentation auxiliaire SA01, SA02 alimentée par la source d'alimentation principale CO1. Dans l'exemple décrit, ces premières sources d'alimentation auxiliaires reçoivent d'une part le potentiel fourni aux cathodes et d'autre part le potentiel fourni à la deuxième électrode C21, C22 des collecteurs. Ces premières sources auxiliaires SA01, SA02, doivent être capables de supporter un court-circuit entre une des premières anodes A01, A02 et la cathode K1, K2 associée, la seconde anode A11, A12 associée ou la masse. A cet effet, un dispositif de protection est placé en série entre chacune des premières sources SA01, SA02 et la première anode A01, A02. Ce dispositif de protection est représenté sous la forme d'un élément résistant R01, R02 de valeur appropriée. Il augmente l'impédance de chacune des premières sources d'alimentation auxiliaires. Il est avantageux que le dispositif de protection puisse supporter un fonctionnement permanent en court-circuit.

Au lieu d'utiliser un élément résistant R01, R02 comme dispositif de protection, il est possible d'utiliser un contact de relais comme l'illustre la figure 3.

Les senseurs de courant SC1 et SC2 sont également utilisés de la même manière que sur la figure 1. Ils sont montés entre les relais Re1, Re2 et la source d'alimentation principale CO1 dans l'exemple de la figure 2.

Chaque tube T1, T2 est relié à une seconde source d'alimentation auxiliaire SA1, SA2 qui alimente au moins son dispositif de chauffage F1 et FK1, F2 et FK2 et son wehnelt W1, W2. Ces secondes sources d'alimentation auxiliaires SA1, SA2 sont commandables séparément, elles peuvent être arrêtées volontairement en cas de nécessité. Elles peuvent être réalisées comme la source d'alimentation principale CO1 sous la forme d'un transformateur avec un primaire et un ou plusieurs secondaires associés ou non à des moyens de redressement. De préférence, dans les applications spatiales notamment, elles sont protégées contre les surintensités et les court-circuits.

Dans l'exemple décrit, les tubes T1, T2 possèdent une seconde anode A11, A12 qui sert de barrière ionique et la seconde anode de chaque tube est alimentée aussi par cette seconde source d'alimentation auxiliaire SA1, SA2. Chaque seconde source d'alimentation auxiliaire SA1, SA2 est référencée par rapport au potentiel de cathode du tube qu'elle alimente et dans cet exemple par rapport à la masse car elle alimente aussi une seconde anode.

Lorsqu'un tube présente un défaut d'isolement, dans la majorité des cas, celui-ci entraîne une défocalisation du faisceau d'électrons et donc une augmentation sensible du courant global d'hélice. Il est prévu, un dispositif de protection PH de surintensité globale d'hélice associée à une télémétrie dans les applications spatiales. Ce dispositif de protection PH a pour capteur un élément résistant, placé en série entre la source d'alimentation principale CO1 et les hélices H1, H2 qui sont montées en parallèle. Une augmentation anormale du courant d'hélice global, au dessus d'un seuil prédéterminé, déclenche un arrêt d'au moins la source d'alimentation principale CO1. Il peut être avantageux dans les applications spatiales que ce soit l'ensemble des sources d'alimentation qui s'arrête. Cela évite de détériorer les sources d'alimentation.

Si l'ensemble des sources d'alimentation s'arrête, on vérifie l'état des tubes un par un. Pour cela, l'on démarre, par télécommande dans les applications spatiales, l'une des secondes sources d'alimentation auxiliaires, SA1 par exemple, et la source d'alimentation principale CO1. On vérifie le fonctionnement du tube alimenté, ici T1, par au moins son courant d'hélice et sa puissance de sortie. Si le tube T1 est considéré comme déficient, il faut l'isoler en arrêtant de manière volontaire sa seconde source d'alimentation auxiliaire SA1. Le contact du relais Re1 relié à sa cathode K1 sera ouvert dans le cas où la défaut détecté affecte l'isolement haute tension de sa cathode K1, de son wehnelt W1 ou de son dispositif de chauffage F1, FK1. Si le tube T1 est en état de marche, on arrête alors sa seconde source d'alimentation auxiliaire SA1 pour tester un autre tube T2 par exemple. L'ouverture du contact du relais Re1 n'est pas nécessaire. Lorsque tous les tubes ont été testés, les tubes en état de marche peuvent continuer à fonctionner en redémarrant leurs secondes sources d'alimentation auxiliaires et en refermant, si nécessaire, les contacts des relais correspondants.

De manière classique, la source d'alimentation principale CO1 est protégée contre les surconsommations de courant, cette protection placée au primaire P' entraîne son arrêt. Il en est de même pour les secondes sources d'alimentation auxiliaires.

Au lieu que les secondes anodes A11, A12 des tubes soient alimentées par les secondes sources d'alimentation auxiliaires SA1, SA2 comme l'illustre la figure 2, il est possible que les secondes anodes soient alimentées par la source d'alimentation principale CO1. Cette variante est illustrée à la figure 3.

Un secondaire S'0 a été ajouté à la source d'alimentation principale CO1. Des moyens de redressement D'0 lui sont connectés. Un condensateur C'0 est monté aux bornes de sortie des moyens de redressement D'0. Le secondaire S'0 fournit une tension positive par rapport à la masse. Les secondes anodes A11 et A12 sont connectées chacune au secondaire S'0 de la source d'alimentation principale CO1. Un dispositif de protection Ra1, Ra2 est inséré entre chaque seconde anode respectivement A11, A12 et la source d'alimentation principale CO1. Ce dispositif de protection protège la source d'alimentation principale CO1 en présence d'un défaut d'isolement de l'une des secondes anodes A11, A12. Le dispositif de protection peut être un élément résistant, de valeur appropriée, monté en série entre la source d'alimentation principale CO1 et chacune des secondes anodes A11, A12.

Des contacts de relais Re'1, Re'2 protègent les premières sources d'alimentation auxiliaires SA01, SA02. Les contacts des relais Re'1, Re'2 et Re1, Re2 associés à un même tube T1, T2, peuvent être actionnés simultanément. Ils peuvent même appartenir à un relais multicontact.

Des résistances série R sont associées aux relais Re'1, Re'2.

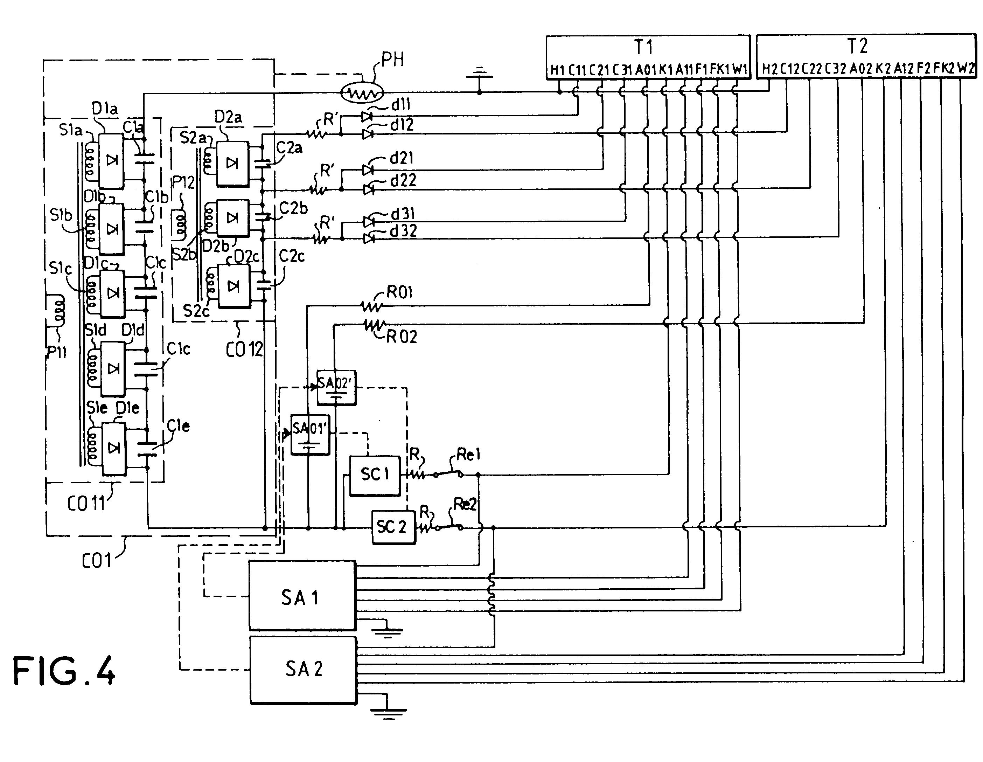

Au lieu d'alimenter les premières anodes A01, A02 de régulation de courant, chacune par une première source d'alimentation auxiliaire SA01, SA02 alimentée par la source d'alimentation principale CO1, il est possible que les premières sources d'alimentation auxiliaires SA01', SA02' soient des sources indépendantes référencées par rapport à un potentiel fourni par la source d'alimentation principale CO1. Cette seconde variante est illustrée à la figure 4. Dans l'exemple représenté ce potentiel est le potentiel fourni aux cathodes mais d'autres choix sont possibles.

Dans cette configuration, l'arrêt de l'une des secondes sources d'alimentation auxiliaires SA1, SA2 peut commander l'arrêt de la première source d'alimentation auxiliaire SA01', SA02' alimentant le même tube. Il en est de même pour le démarrage de l'une des secondes sources d'alimentation auxiliaires qui commande celui de la première source d'alimentation auxiliaire alimentant le même tube. Pour le démarrage il y a une temporisation.

Au lieu d'utiliser une source unique d'alimentation principale CO1, on peut utiliser une source d'alimentation principale CO1 formée de plusieurs sources d'alimentation élémentaires CO11, CO12 distinctes, de puissance moindre, pour permettre un réglage plus facile des tensions. Les cathodes K1, K2 sont alimentées par une première source d'alimentation élémentaire CO11. Le dispositif d'interaction H1, H2 est relié à cette première source d'alimentation élémentaire CO11.

Les électrodes C11, C12, C21, C22, C31, C32 de collecteur sont alimentées par au moins une deuxième source d'alimentation élémentaire CO12.

Chacune des sources d'alimentation élémentaires CO11, CO12 comprend un primaire respectivement P11, P12, plusieurs secondaires respectivement S1a, S1b, S1c, S1d, S1e et S2a, S2b, S2c, des moyens de redressement respectivement D1a, D1b, D1c, D1d, D1e et D2a, D2b, D2c, et des condensateurs respectivement C1a, C1b, C1d, C1e, et C2a, C2b, C2c.

De manière classique sur les figures 2 à 4, des résistances toutes référencées R sont placées en série entre la source d'alimentation principale CO1 et les cathodes K1, K2. Elles ont le même rôle que celles de la figure 1.

Le dispositif d'alimentation électrique selon l'invention est plus fiable que ceux de l'art antérieur car quel que soit le défaut d'isolement entre électrodes ou entre électrode et masse dans un des tubes, il est possible d'isoler ce dernier sans mettre en danger les sources d'alimentation et sans empêcher le fonctionnement des autres tubes. Le tableau ci-dessous passe en revue le comportement d'un tube alimenté par un dispositif d'alimentation selon l'invention conforme à celui décrit à la figure 2, en cas de mauvais isolement entre électrodes.

|  | C1 | C2 | C3 | A0 | K | A1 | F | FK | W |
|---|---|---|---|---|---|---|---|---|---|
| H | 1 ou 5<br>2 ou 4 | 1 ou 5<br>2 ou 4 | 1 ou 5<br>2 ou 4 | 1<br>3 et 4 | 1<br>4 | 1<br>3 ou 4 | 1<br>4 | 1<br>4 | 1<br>4 |
| C1 |  | 1 ou 5<br>2 ou 4 | 1 ou 5<br>2 ou 4 | 6 | 6 | 6 | 6 | 6 | 6 |
| C2 |  |  | 1 ou 5<br>2 ou 4 | 6 | 6 | 6 | 6 | 6 | 6 |
| C3 |  |  |  | 6 | 6 | 6 | 6 | 6 | 6 |
| A0 |  |  |  |  | 1 ou 7<br>3 ou 4 | 1<br>3 et 4 | 1 ou 7<br>3 et 4 | 1 ou 7<br>3 et 4 | 1 ou 7<br>3 et 4 |
| K |  |  |  |  |  | 1<br>4 | 1<br>4 | 8 | 1 ou 9<br>4 |
| A1 |  |  |  |  |  |  | 1<br>4 | 1<br>4 | 1<br>4 |
| F |  |  |  |  |  |  |  | 1<br>4 | 1 ou 9<br>4 |
| FK |  |  |  |  |  |  |  |  | 1 ou 9<br>4 |

Légendes:

1 : La détection d'une surintensité du courant d'hélice ou d'une surconsommation sur la source d'alimentation principale engendre l'arrêt d'au moins la source d'alimentation principale.

La détection d'une surconsommation sur l'une des secondes sources d'alimentation auxiliaires engendre l'arrêt d'au moins celle-ci.

2 : Protection de la source d'alimentation principale par les moyens de protection unidirectionnels.

3 : Protection des premières sources d'alimentation auxiliaires par l'impédance de source.

4 : Isolement du tube déficient par arrêt volontaire de la seconde source d'alimentation auxiliaire qui l'alimente et ouverture des moyens de coupure associés à sa cathode.

5 : Surpuissance au primaire de la source d'alimentation principale sans arrêt.

6 : Impossible 7 : Absence d'hyperfréquence délivrée par le tube    8: pas de problème 9 : Dégradation de la focalisation du faisceau

Ce qui suit présente l'apport de l'invention sur la fiabilité de l'équipement. Selon la norme internationale connue sous la dénomination anglaise "Reliability prediction of electronic equipment MIL.HDBK. 217F", le taux de panne d'une diode haute tension de type USR.80.A est:

$\lambda$(diode) = 59 pannes/$10^9$ heure, ce qui donne une probabilité de panne d'une diode sur 10 ans :

$$P1 = 1 - e^{-\lambda T}$$

$$P1 = 5,1671.10^{-3}$$

. Le taux de panne de deux diodes montées en parallèle vaut :

$$\lambda \text{ (2 diodes en //)} = 0,3 \text{ pannes}/10^9 \text{ heures}$$

. La probabilité de panne de deux diodes montées en parallèle devient :

$$P2 = (5,1671.10^{-3})^2$$

. Le taux de panne des connexions d'une diode vaut :

$$\lambda \text{ (connexion d'une diode)} = 0,5 \text{ panne}/10^9 \text{ heures}$$

Lorsque l'on désire alimenter quatre tubes à ondes progressives avec trois électrodes au collecteur et que les moyens de protection de la source d'alimentation principale par rapport au collecteur consistent en deux diodes en parallèle par électrode de collecteur, le taux de panne des diodes est :

$$\lambda \text{ (24 diodes)} = 0,3 \text{ X } 3 \text{ X } 4 \text{ pannes}/10^9 \text{ heures}$$

$$= 3,3 \text{ pannes}/10^9 \text{ heures}$$

. Le taux de panne des connexions des diodes vaut :

$$\lambda \text{ (connexions)} = 0,5 \text{ X } 2 \text{ X } 3 \text{ X } 4 \text{ pannes}/10^9 \text{ heures}$$

$$= 12 \text{ pannes}/10^9 \text{ heures}$$

. Le taux de panne des diodes et de leurs connexions vaut :

$$\lambda \text{ (24 diodes + connexions)} \approx 16 \text{ pannes}/10^9 \text{ heures}$$

. Le taux de panne d'un relais de type Kilovac HC2 vaut :

$$\lambda \text{ (1 relais)} = 3,15 \text{ pannes}/10^9 \text{ heures}$$

. Le taux de panne des deux connexions d'un relais vaut :

$$\lambda \text{ (connexions)} = 1 \text{ panne}/10^9 \text{ heures}$$

. Le taux de panne de 4 relais et de leurs connexions vaut :

$$\lambda \text{ (4 relais + connexions)} \approx 17 \text{ pannes/}10^9 \text{ heures}$$

. Le taux de panne d'un tube vaut :

$$\lambda \text{ (tube)} = 337 \text{ pannes/}10^9 \text{ heures}$$

. Le taux de panne des sources d'alimentation seules est sensiblement le même dans le montage classique (figure 1) et dans le montage selon l'invention (figure 2). Il vaut:

$$\lambda \text{ (alim.)} = 465 \text{ pannes/}10^9 \text{ heures}$$

. La probabilité de panne du montage classique, sur 10 ans, avec un tube en panne engendrant la défaillance des quatre tubes vaut :

$$\text{Prob (panne du montage)} = \text{Prob (panne des alimentations)} + 4 \text{ Prob (panne d'un tube)}$$

$$\text{Prob (panne du montage)} = 1 - e^{-\lambda(alim.)T} + 4 \, (1 - e^{-\lambda(tube)T})$$

$$\text{Prob (panne du montage)} = 3{,}99.10^{-2} + 4 \, (2{,}91.10^{-2}) = 0{,}156$$

. La probabilité de panne du montage selon l'invention, sur 10 ans, pour un tube en panne vaut :

$$\text{Prob (panne du montage)} = \text{Prob (panne des alimentations et des protections )} + 4\text{Prob(panne d'un tube)}$$

$$\text{Prob (panne du montage)} = 1 - e^{-\lambda \text{ (alim + diodes + relais + connexions)}T} + 4(1 - e^{-\lambda(tube)T})$$

$$= 4{,}268.10^{-2} + 4(2{,}91.10^{-2})$$

$$= 0{,}159$$

. La probabilité de panne du montage selon l'invention, sur 10 ans, pour deux tubes en panne vaut :

$$\text{Prob (panne du montage)} = \text{Prob (panne des alimentations}$$

$$\text{et des protections)} + 4\text{Prob (panne d'un tube)} \times 3\text{Prob (panne d'un tube)}$$

$$= 4{,}268.10^{-2} + 4(2{,}91.10^{-2}) \times 3(2{,}91.10^{-2})$$

$$= 0{,}0528$$

. La probabilité de panne du montage selon l'invention, sur 10 ans, pour quatre tubes en panne vaut :

$$\text{Prob (panne du montage)} = \text{Prob (panne des alimentations et}$$

$$\text{des protections)} + 4\text{Prob (panne d'un tube)} \times 3\text{Prob (panne d'un tube)} \times$$

**EP 0 772 220 B1**

2Prob (panne d'un tube) X Prob (panne d'un tube)

$$= 4{,}268.10^{-2} + 4! \, (2{,}91.10^{-2})^4$$

$$= 0{,}0427$$

Le dispositif d'alimentation selon l'invention est plus fiable que celui utilisé classiquement, la probabilité de panne, sur 10 ans, conduisant à la perte d'un canal sur quatre ou à une baisse de puissance de 25 % est identique à la probabilité de panne totale du montage classique, panne engendrée, par exemple, par la défaillance de l'un des tubes.

De plus, la probabilité de panne, sur 10 ans, conduisant à la perte de deux canaux sur quatre ou à une baisse de puissance de 50 % est trois fois plus faible que la probabilité de panne totale du montage classique, panne engendrée, par exemple, par la défaillance de l'un des tubes.

**Revendications**

1.  Dispositif d'alimentation électrique d'un ensemble de tubes électroniques (T1, T2) qui possèdent chacun:

    -   un canon comportant une cathode (K1, K2) destinée à émettre un faisceau d'électrons lorsqu'elle est chauffée par un dispositif de chauffage (F1, FK1, F2, FK2), un wehnelt (W1, W2), une anode de régulation du faisceau d'électrons (A01; A02),
    -   une ou plusieurs électrodes (C11, C12 ; C21, C22 ;C31, C32) d'un collecteur,
    -   un dispositif d'interaction (H1, H2) du faisceau d'électrons situé entre le canon et le collecteur,

    le dispositif d'alimentation comprenant:

    -   une source d'alimentation principale (CO1), formée éventuellement de plusieurs sources d'alimentation élémentaires (CO11, CO12), destinée à alimenter en parallèle au moins les cathodes (K1, K2), les électrodes (C11, C12; C21, C22 ; C31, C32) de collecteur et,
    -   des premières sources d'alimentation auxiliaires distinctes (SA01, SA02) pour alimenter chacune l'anode (A01, A02) d'un tube caractérisé en ce qu'il comporte des secondes sources d'alimentation auxiliaires (SA1, SA2) commandables séparément pour alimenter chacune au moins le wehnelt (W1, W2) et le dispositif de chauffage (F1, FK1; F2, FK2) d'un même tube (T1, T2),
    -   des éléments de protection unidirectionnels (d11, d12 ; d21, d22 ; d31, d32) pour protéger la source d'alimentation principale (CO1) de chacune des électrodes (C11, C12; C21, C22 ; C31, C32) de collecteur,
    -   des moyens de coupure (Re1, Re2) pour isoler la source d'alimentation principale (CO1) de chacune des cathodes (K1, K2),
    -   des moyens de protection (PH) de l'ensemble des dispositifs d'interaction (H1, H2) prévus pour arrêter au moins la source d'alimentation principale (CO1) lorsque les dispositifs d'interaction (H1, H2) sont parcourus par un courant global supérieur à un seuil,
    -   des dispositifs de protection (R01, R02) des premières sources d'alimentation auxiliaires (SA01, SA02) en cas de court-circuit mettant en jeu une des anodes (A01, A02).

2.  Dispositif d'alimentation électrique selon la revendication 1, avec une source d'alimentation principale (CO1) formée de plusieurs sources d'alimentation élémentaires (CO11, CO12), caractérisé en ce qu'une première source d'alimentation élémentaire (CO11) alimente les cathodes (K1, K2) et au moins une seconde source d'alimentation élémentaire (CO12) les électrodes de collecteur (C11, C12, C21, C22, C31, C32).

3.  Dispositif d'alimentation électrique selon l'une des revendications 1 ou 2, les canons possédant chacun une seconde anode (A11, A12) servant de barrière ionique, caractérisé en ce que les secondes anodes (A11, A12) sont alimentées chacune par une des secondes sources d'alimentation auxiliaires (SA1, SA2).

4.  Dispositif d'alimentation électrique selon l'une des revendications 1 ou 2, les canons possédant chacun une seconde anode (A11, A12) servant de barrière ionique, caractérisé en ce que les secondes anodes (A11, A12) sont alimentées par la source d'alimentation principale (CO1), des dispositifs de protection (Ra1, Ra2) étant prévus pour protéger la source d'alimentation principale (CO1) de chacune des secondes anodes (A11, A12).

**5.** Dispositif d'alimentation électrique selon l'une des revendications 1 à 4, caractérisé en ce que les éléments de protection unidirectionnels (d11, d12 ; d21, d22 ; d31, d32) sont des éléments semi-conducteurs tels que des diodes ou des thyristors.

**6.** Dispositif d'alimentation électrique selon la revendication 5, caractérisé en ce que les éléments semi-conducteurs (d11, d'11 ; d12, d'12 ; d21, d'21, d22, d'22, d31, d'31, d32, d'32) sont associés à plusieurs dans un montage parallèle.

**7.** Dispositif d'alimentation électrique selon l'une des revendications 1 à 6, caractérisé en ce que les moyens de coupure sont des contacts de relais (Re1, Re2).

**8.** Dispositif d'alimentation électrique selon l'une des revendications 1 à 7, caractérisé en ce que les premières sources d'alimentation auxiliaires (SA01, SA02) sont référencées par rapport à un potentiel fourni par la source d'alimentation principale (CO1).

**9.** Dispositif d'alimentation électrique selon la revendication 8, caractérisé en ce que ce potentiel est le potentiel fourni aux cathodes (K1, K2).

**10.** Dispositif d'alimentation électrique selon l'une des revendications 1 à 7, caractérisé en ce que les premières sources d'alimentation auxiliaires (SA01, SA02) sont alimentées par la source d'alimentation principale (CO1).

**11.** Dispositif d'alimentation électrique selon l'une des revendications 1 à 10, caractérisé en ce que les dispositifs de protection des premières sources d'alimentation auxiliaires (SA01, SA02) sont des contacts de relais (Re'1, Re'2).

**12.** Dispositif d'alimentation électrique selon la revendication 11, caractérisé en ce que les contacts des relais (Re1, Re'1 ; Re2, Re'2) associés à un même tube sont actionnés simultanément.

**13.** Dispositif d'alimentation électrique selon l'une des revendications 7, 11 ou 12, caractérisé en ce que les contacts de relais (Re1, Re'1 ; Re2, Re'2) associés à un même tube appartiennent à un relais multicontact.

**14.** Dispositif d'alimentation électrique selon l'une des revendications 1 à 10, caractérisé en ce que les dispositifs de protection (R01, R02, Ra1, Ra2) des premières sources d'alimentation auxiliaires (SA01, SA02) et de la source d'alimentation principale (CO1) sont des éléments résistants.

**15.** Dispositif d'alimentation électrique selon l'une des revendications 1 à 14, caractérisé en ce que chaque seconde source d'alimentation auxiliaire (SA1, SA2) est référencée par rapport au potentiel de cathode (K1, K2) du tube qu'elle alimente.

**16.** Dispositif d'alimentation électrique selon l'une des revendications 3 à 15, caractérisé en ce que les secondes sources d'alimentation auxiliaires (SA1, SA2) sont référencées par rapport à la masse lorsqu'elles alimentent les secondes anodes (A11, A12).

**17.** Dispositif d'alimentation électrique selon l'une des revendications 1 à 16, caractérisé en ce qu'un arrêt et/ou un démarrage d'une seconde source d'alimentation auxiliaire (SA1) commande l'ouverture et/ou la fermeture du moyen de coupure (Re1, Re2) relié à la cathode (K1) du tube (T1) alimenté par ladite seconde source (SA1) d'alimentation auxiliaire (SA1).

**18.** Dispositif d'alimentation électrique selon l'une des revendications 8 ou 9, caractérisé en ce qu'un arrêt et/ou démarrage d'une seconde source d'alimentation auxiliaire (SA1) commande l'arrêt et/ou le démarrage de la première source d'alimentation auxiliaire (SA01) alimentant le même tube que ladite seconde source d'alimentation auxiliaire (SA1).

**Patentansprüche**

**1.** Vorrichtung zur elektrischen Stromversorgung einer Mehrzahl von Elektronenröhren (T1, T2), die je aufweisen:

- eine Elektronenkanone mit einer Kathode (K1, K2), die einen Strahl von Elektronen aussenden soll, wenn sie von einer Heizvorrichtung (F1, FK1, F2, FK2) aufgeheizt wird, mit einem Wehneltzylinder (W1, W2) und mit einer Anode zur Regelung des Elektronenstrahls (AO1, AO2),

- eine oder mehrere Elektroden (C11, C12; C21, C22; C31, C32) eines Kollektors,
- eine Wechselwirkungsvorrichtung (H1, H2) für den Elektronenstrahl zwischen der Kanone und dem Kollektor, während die Stromversorgungsvorrichtung aufweist:
- eine Hauptstromquelle (CO1), die gegebenenfalls aus mehreren elementaren Stromquellen (CO11, CO12) besteht und mindestens die Kathoden (K1, K2) und die Elektroden (C11, C12; C21, C22; C31, C32) des Kollektors parallel mit Strom versorgen sollen,
- und getrennte erste Hilfsstromquellen (SAO1, SAO2) für die Speisung je einer Anode (AO1, AO2) einer Röhre, dadurch gekennzeichnet, daß sie zweite Hilfsstromquellen (SA1, SA2) aufweist, die getrennt steuerbar sind, um je mindestens den Wehneltzylinder (W1, W2) und die Heizvorrichtungen (F1, FK1; F2, FK2) einer der Röhren (T1, T2) zu speisen,
- in einer Richtung leitende Schutzelemente (d11, d12; d21, d22; d31, d32), um die Hauptstromquelle gegen jede der Kollektorelektroden (C11, C12; C21, C22; C31, C32) zu schützen,
- Schaltmittel (Re1, Re2), um die Hauptstromquelle (CO1) gegen jede der Kathoden (K1, K2) zu isolieren,
- Schutzmittel (PH) für die Gesamtheit der Wechselwirkungsvorrichtungen (H1, H2), um mindestens die Hauptstromquelle (CO1) auszuschalten, wenn die Wechselwirkungsvorrichtungen (H1, H2) von einem globalen Strom oberhalb eines Grenzwerts durchflossen werden,
- Schutzvorrichtungen (RO1, RO2) für die ersten Hilfsstromquellen (SAO1, SAO2) im Fall eines Kurzschlusses an einer der Kathoden (AO1, AO2).

2. Elektrische Stromversorgungsvorrichtung nach Anspruch 1, mit einer Hauptstromquelle (CO1), die aus mehreren elementaren Stromquellen (CO11, CO12) besteht, dadurch gekennzeichnet, daß eine erste elementare Stromquelle (CO11) die Kathoden (K1, K2) und mindestens eine zweite elementare Stromquelle (CO12) die Kollektorelektroden (C11, C12, C21, C22, C31, C32) speist.

3. Elektrische Stromversorgungsvorrichtung nach einem der Ansprüche 1 oder 2, in der die Elektronenkanonen je eine zweite Anode (A11, A12) besitzen, die als Ionenbarriere wirkt, dadurch gekennzeichnet, daß die zweiten Anoden (A11, A12) je von einer der zweite Hilfsstromquellen (SA1, SA2) gespeist werden.

4. Elektrische Stromversorgungsvorrichtung nach einem der Ansprüche 1 oder 2, in der die Elektronenkanonen je eine zweite Anode (A11, A12) besitzen, die als Ionenbarriere dient, dadurch gekennzeichnet, daß die zweiten Anoden (A11, A12) von der Hauptstromquelle (CO1) gespeist werden, wobei Schutzvorrichtungen (Ra1, Ra2) zum Schutz der Hauptstromquelle (CO1) gegen jede der zweiten Anoden (A11, A12) vorgesehen sind.

5. Elektrische Stromversorgungsvorrichtung nach einem der Ansprüche 1 bis 4, dadurch gekennzeichnet, daß die in einer Richtung leitenden Schutzelemente (d11, d12; d21, d22; d31, d32) Halbleiterelemente wie Dioden oder Thyristoren sind.

6. Elektrische Stromversorgungsvorrichtung nach Anspruch 5, dadurch gekennzeichnet, daß die Halbleiterelemente (d11, d'11; d12, d'12; d21, d'21; d22, d'22; d31, d'31; d32, d'32) zu mehreren in einer Parallelschaltung angeordnet sind.

7. Elektrische Stromversorgungsvorrichtung nach einem der Ansprüche 1 bis 6, dadurch gekennzeichnet, daß die Schaltmittel Relaiskontakte (Re1, Re2) sind.

8. Elektrische Stromversorgungsvorrichtung nach einem der Ansprüche 1 bis 7, dadurch gekennzeichnet, daß das Bezugspotential der ersten Hilfsstromquellen (SAO1, SAO2) ein von der Hauptstromquelle (CO1) geliefertes Potential ist.

9. Elektrische Stromversorgungsvorrichtung nach Anspruch 8, dadurch gekennzeichnet, daß dieses Potential das an die Kathoden (K1, K2) gelieferte Potential ist.

10. Elektrische Stromversorgungsvorrichtung nach einem der Ansprüche 1 bis 7, dadurch gekennzeichnet, daß die ersten Hilfsstromquellen (SAO1, SAO2) von der Hauptstromquelle (CO1) gespeist werden.

11. Elektrische Stromversorgungsvorrichtung nach einem der Ansprüche 1 bis 10, dadurch gekennzeichnet, daß die Vorrichtungen zum Schutz der ersten Hilfsstromquellen (SAO1, SAO2) Relaiskontakte (Re'1, Re'2) sind.

**12.** Elektrische Stromversorgungsvorrichtung nach Anspruch 11, dadurch gekennzeichnet, daß die Relaiskontakte (Re1, Re'1; Re2, Re'2), die einer bestimmten Röhre zugeordnet sind, gemeinsam betätigt werden.

**13.** Elektrische Stromversorgungsvorrichtung nach einem der Ansprüche 7, 11 oder 12, dadurch gekennzeichnet, daß die Relaiskontakte (Re1, Re'1; Re2, Re'2), die einer bestimmten Röhre zugeordnet sind, zu einem Vielfachkontaktrelais gehören.

**14.** Elektrische Stromversorgungsvorrichtung nach einem der Ansprüche 1 bis 10, dadurch gekennzeichnet, daß die Schutzvorrichtungen (RO1, RO2, Ra1, Ra2) der ersten Hilfsstromquellen (SAO1, SAO2) und der Hauptstromquelle (CO1) Widerstandselemente sind.

**15.** Elektrische Stromversorgungsvorrichtung nach einem der Ansprüche 1 bis 14, dadurch gekennzeichnet, daß das Bezugspotential jeder zweiten Hilfsstromquelle (SA1, SA2) das Potential der Kathode (K1, K2) der von ihr gespeisten Röhre ist.

**16.** Elektrische Stromversorgungsvorrichtung nach einem der Ansprüche 3 bis 15, dadurch gekennzeichnet, daß das Bezugspotential der zweiten Hilfsstromquellen (SA1, SA2) Masse ist, wenn sie die zweiten Anoden (A11, A12) speisen.

**17.** Elektrische Stromversorgungsvorrichtung nach einem der Ansprüche 1 bis 16, dadurch gekennzeichnet, daß durch Ausschalten und/oder Einschalten einer zweiten Hilfsstromquelle (SA1) das Öffnen und/oder Schließen des Schaltmittels (Re1, Re2) gesteuert wird, das an die Kathode (K1) der Röhre (T1) angeschlossen ist, welche von dieser zweiten Hilfsstromquelle (SA1) gespeist wird.

**18.** Elektrische Stromversorgungsvorrichtung nach einem der Ansprüche 8 oder 9, dadurch gekennzeichnet, daß durch das Ausschalten und/oder Einschalten einer zweiten Hilfsstromquelle (SA1) das Ausschalten und/oder Einschalten der ersten Hilfsstromquelle (SAO1) gesteuert wird, die die gleiche Röhre wie diese zweite Hilfsstromquelle (SA1) speist.

**Claims**

**1.** Device for the electrical supply of a set of electron tubes (T1, T2), each tube having:

- a gun comprising a cathode (K1, K2) designed to emit an electron beam when it is heated by a heating device (F1, FK1, F2, FK2), a beam-focusing electrode (W1, W2), an anode for the regulation of the electron beam (AO1; AO2),
- one or more electrodes (C11, C12; C21, C22; C31, C32) of a collector,
- a device (H1, H2) for the interaction of the electron beam located between the gun and the collector, the supply device comprising:
- a main supply source (CO1), possibly made up of a plurality of elementary supply sources (CO11, CO12), and designed to supply in parallel at least the cathodes (K1, K2) and the collector electrodes (C11, C12; C21, C22; C31, C32), and
- first distinct auxiliary supply sources (SAO1, SA02), each designed to supply the anode (AO1, AO2) of a tube characterised in that it comprises second auxiliary supply sources (SA1, SA2) adapted to be controlled separately so that each supplies at least the beam-focusing electrode (W1, W2) and the heating device (F1, FK1; F2, FK2) of one and the same tube (T1, T2),
- one-way protection elements (d11, d12; d21, d22; d31, d32) to protect the main supply source (CO1) of each of the collector electrodes (C11, C12; C21, C22; C31, C32),
- cut-off means (Re1, Re2) to isolate the main supply source (CO1) of each of the cathodes (K1, K2),
- means (PH) for the protection of all the interaction devices (H1, H2) designed to stop at least the main supply source (CO1) when the interation devices (H1, H2) are crossed by a total current that is above a threshold,
- devices (RO1, RO2) for the protection of the first auxiliary supply sources (SAO1, SAO2) in the event of a short circuit bringing into action one of the anodes (AO1, AO2).

**2.** Electrical supply device according to claim 1, having a main supply source (CO1) formed by a plurality of elementary supply sources (CO11, CO12), characterised in that a first elementary supply source (CO11) supplies the cathodes (K1, K2) and at least one second elementary supply source (CO12) supplies the collector electrodes (C11, C12,

C21, C22, C31, C32).

3. Electrical supply device according to either of claims 1 and 2, wherein the guns each include a second anode (A11, A12) used as an ion barrier, characterised in that the second anodes (A11, A12) are each supplied by one of the second auxiliary supply sources (SA1, SA2).

4. Electrical supply device according to either of claims 1 and 2, wherein the guns each include a second anode (A11, A12) used as an ion barrier, characterised in that the second anodes (A11, A12) are supplied by the main supply source (CO1), and protection devices (Ra1, Ra2) are provided to protect the main supply source (CO1) of each of the second anodes (A11, A12).

5. Electrical supply device according to any of claims 1 to 4, characterised in that the one-way protection elements (d11, d12; d21, d22, d31, d32) are semiconductor elements such as diodes or thyristors.

6. Electrical supply device according to claim 5, characterised in that the semiconductor elements (d11, d'11; d12, d'12, d21, d'21, d22, d'22, d31, d'31, d32, d'32) are associated in a plurality in a parallel assembly.

7. Electrical supply device according to any of claims 1 to 6, characterised in that the cut-off means are relay contacts (Re1, Re2).

8. Electrical supply device according to any of claims 1 to 7, characterised in that the first auxiliary supply sources (SAO1, SAO2) are referenced with respect to a potential provided by the main supply source (CO1).

9. Electrical supply device according to claim 8, characterised in that said potential is the potential provided to the cathodes (K1, K2).

10. Electrical supply device according to any of claims 1 to 7, characterised in that the first auxiliary supply sources (SAO1, SAO2) are supplied by the main supply source (CO1).

11. Electrical supply device according to any of claims 1 to 10, characterised in that the protection devices of the first auxiliary supply sources (SAO1, SAO2) are relay contacts (Re'1, Re'2).

12. Electrical supply device according to claim 11, characterised in that the relay contacts (Re1, Re'1; Re2, Re'2) associated with one and the same tube are activated simultaneously.

13. Electrical supply device according to any of claims 7, 11 or 12, characterised in that the relay contacts (Re1, Re'1; Re2, Re'2) associated with one and the same tube belong to a multicontact relay.

14. Electrical supply device according to any of claims 1 to 10, characterised in that the protection devices (RO1, RO2, Ra1, Ra2) of the first auxiliary supply sources (SAO1, SAO2) and of the main supply source (CO1) are resistive elements.

15. Electrical supply device according to any of claims 1 to 14, characterised in that each second auxiliary supply source (SA1, SA2) is referenced with respect to the cathode potential (K1, K2) of the tube that it supplies.

16. Electrical supply device according to any of claims 3 to 15, characterised in that the second auxiliary supply sources (SA1, SA2) are referenced with respect to ground when they supply the second anodes (A11, A12).

17. Electrical supply device according to any of claims 1 to 16, characterised in that a stopping and/or starting of a second auxiliary supply source (SA1) controls the opening and/or closure of the cut-off means (Re1, Re2) connected to the cathode (K1) of the tube (T1) supplied by said second auxiliary supply source (SA1).

18. Electrical supply device according to either of claims 8 and 9, characterised in that a stopping and/or starting of a second auxiliary supply source (SA1) controls the stopping and/or starting of the first auxiliary supply source (SAO1) supplying the same tube as said second auxiliary supply source (SA1).

FIG.1

EP 0 772 220 B1

FIG.2

FIG.3

EP 0 772 220 B1

FIG.4

17